# EUROPEAN PATENT APPLICATION

(11) **EP 2 916 071 A1**
(43) Date of publication of application: **09.09.2015**
(21) Application number: 15154546.4
(22) Date of filing: 10.02.2015
(51) Int. Cl.: F23C 9/00, F23L 7/00

(54) **COMBUSTION SYSTEM WITH CO2-SEQUESTRATION AND RECIRCULATION**

(30) Priority: 05.03.2014 US 201414197506
(71) Applicant: ALSTOM Technology Ltd, 5400 Baden (CH)
(72) Inventor: Stallmann, Olaf, 55270 Essenheim (DE); Levasseur, Armand Alfred, Windsor Locks, CT Connecticut 06096 (US); Gerber, Siegfried Werner, 65817 Eppstein (DE); Tidjani, Niass, 31311 Dhahran (SA); Aqil, Jamal, 31311 Dhahran (SA); Mourad, Younes, 31311 Abqaiq (SA)
(74) Representative: Alstom Technology Ltd

(57) **Abstract**

In the arrangement (1) of a combustion system (2) and a flue gas treatment system (3), the combustion system (2) comprises a combustion chamber (5) with at least an injector (6), a fuel supply line (8) connected to the at least an injector (6), and a gas supply line (7) connected to the at least an injector (6) to premix the fuel with the gas. The gas supply line (7) is connected to a source of compressed gas containing recirculated CO₂ sequestered from the flue gas.

## Description

### TECHNICAL FIELD

The present invention relates to an arrangement of a combustion system and a flue gas treatment system, and an injection method.

The combustion system can be a combustion system of a boiler of a power plant or an industrial furnace. In addition the fuel is preferably a high density fuel, i.e. a fuel that needs the help of an additional fluid in order to be injected into a combustion chamber because of its high viscosity. For example heavy residue is a high viscosity fuel. The invention is applicable with any fuel also different from heavy residue when a fluid to help injection is required.

### BACKGROUND

High viscosity fuel can be used as fuel in combustion chambers of boilers or industrial furnaces; in this respect combustion chambers or furnaces are provided with injectors with nozzles.

The injectors are supplied with fuel and in addition a gas or vapor, usually steam, to help injection.

Typically steam is supplied at one end of the nozzle and fuel is supplied through a side port into the nozzle, such that the steam passes through the nozzle and is injected into the combustion chamber and, while passing through the nozzle, the steam draws fuel through the port; the fuel is thus also injected into the combustion chamber.

The steam used to promote fuel injection is usually withdrawn from the steam cycle; this is disadvantageous because steam is needed for power generation.

In addition, since the steam injected into the combustion chamber with the fuel becomes contaminated from the combustion products, the steam from the flue gas is not recovered and recycled. This causes a water consumption that can be very disadvantageous, in particular in countries where water is expensive (water can be more expensive than oil).

### SUMMARY

An aspect of the invention includes providing an arrangement and a method that avoid or reduce the need of withdrawing steam from the steam cycle for fuel injection promotion.

Another aspect of the invention includes providing an arrangement and a method by which the water consumption for fuel injection promotion can be avoided or reduced.

These and further aspects are attained by providing an arrangement and a method in accordance with the accompanying claims.

### BRIEF DESCRIPTION OF THE DRAWINGS

Further characteristics and advantages will be more apparent from the description of a preferred but non-exclusive embodiment of the arrangement and method, illustrated by way of non-limiting example in the accompanying drawings, in which:
Figure 1 shows an example of the arrangement in a first embodiment;
Figure 2 shows an example of the arrangement in a second embodiment;
Figure 3 shows an example of the arrangement in a third embodiment;
Figure 4 shows an example of the arrangement in a fourth embodiment; and
Figure 5 shows an example of injection.

### DETAILED DESCRIPTION OF EXEMPLARY EMBODIMENTS

With reference to the figures, these show an arrangement 1 of a combustion system 2 (preferably an oxy fuel combustion system, i.e. a combustion system in which fuel is combusted with pure or substantially pure oxygen; also combustion with air is anyhow possible) and a flue gas treatment system 3.

The combustion system 2 comprises a combustion chamber 5 of for example a boiler for generating steam to be expanded in a steam turbine for generating power or industrial furnace.

The combustion chamber 5 has one or more injectors 6 that are connected to a gas supply line 7 and a fuel supply line 8, such that the injectors 6 are supplied with both gas and fuel.

The gas supply line 7 is connected to a source of compressed gas containing CO₂. Preferably the source of compressed gas containing CO₂ is included in the arrangement 1; for example the source can be any connection to any part of the arrangement from which compressed gas containing CO₂ (such as flue gas and/or CO₂ with different purity degree) can be extracted. The compressed gas containing CO₂ can be pure or substantially pure CO₂ or a gas mixture containing CO₂, such as flue gas.

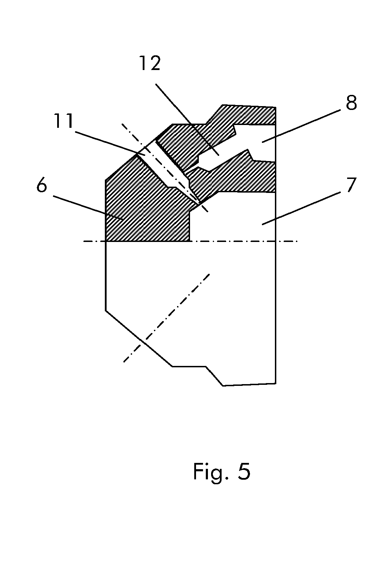

Figure 5 shows an example of a standard injector 6. The injector of figure 5 comprises two nozzles 11, but any number of nozzles 11 is possible, i.e. the injector 6 can have one or more nozzles 11. The nozzles 11 are connected to the gas supply line 7, for injecting the compressed gas containing CO₂.

Each nozzle 11 is connected to a side passage 12, which in turn is connected to the fuel supply line 8. During operation, the fuel is drawn from the compressed gas containing CO₂ that passes through the nozzles 11.

The flue gas treatment system 3 comprises a compressor 15 for compressing the flue gas discharged from the combustion chamber 5.

Usually, downstream of the compressor 15 a mercury removal unit 16 and a dryer 17 are provided. Upstream of the mercury removal unit 16 and the dryer 17 heat exchangers 18, 19 are provided; anyhow the mercury removal unit 16, dryer 17 and heat exchangers 18, 19 are not necessary and are installed according to the design and needs.

From the dryer 17 the flue gas is supplied into a separation stage 20 that is downstream of the compressor 15 and is used for separating CO₂ from other gas contained in the flue gas.

The separation stage 20 is connected to a line 21 for venting gas separated from the CO₂ and a line 22 for supplying the CO₂ into a compressor 23 (typically an intercooled, multistage compressor), a pump 24 (for supercritical CO₂) and storage 25.

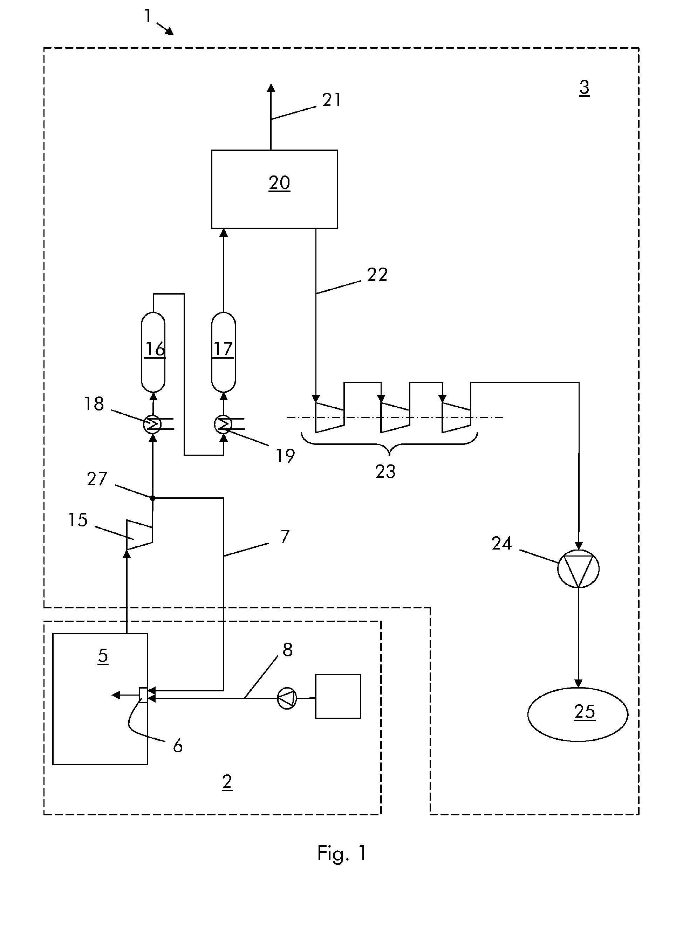

In a first example (figure 1), the source of compressed gas containing CO₂ is a connection 27 downstream of the compressor 15 and upstream of the separation stage 20; thus the compressed gas containing CO₂ is flue gas coming from the combustion chamber 5.

In this embodiment, the gas supply line 7 is preferably connected immediately downstream of the compressor 15, i.e. without any components between the compressor 15 and the connection 27.

The combustion chamber 5 is preferably an oxy-fuel combustion chamber; this allows generation of flue gas at the combustion chamber having a high CO₂ content, such as between 75-85% or even more.

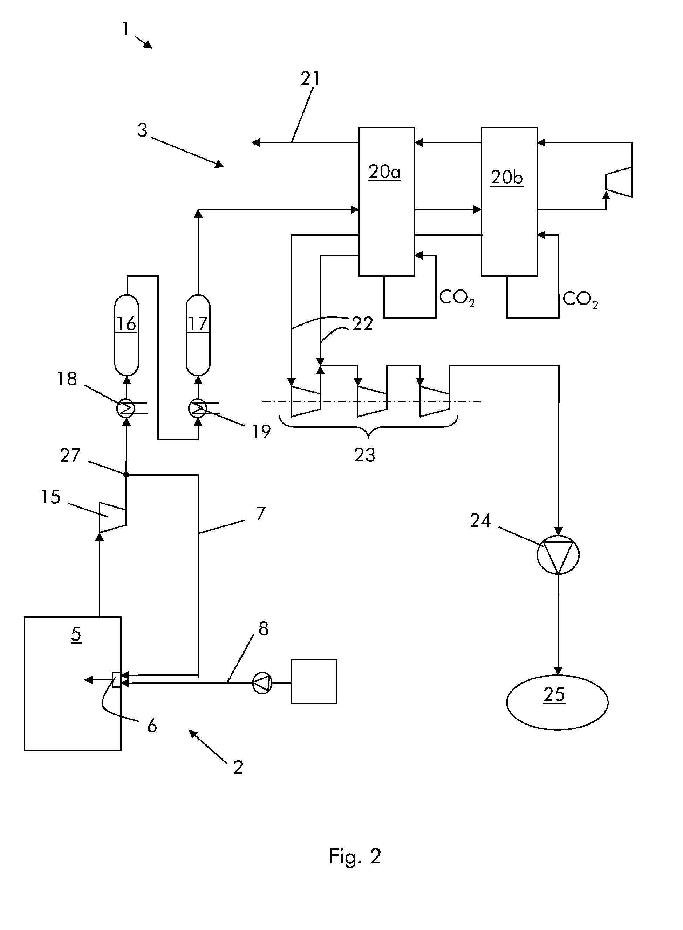

Figure 2 shows an example of an arrangement similar to the first example (i.e. with the connection 27 between the compressor 15 and the separation stage) and two separation stages 20a, 20b.

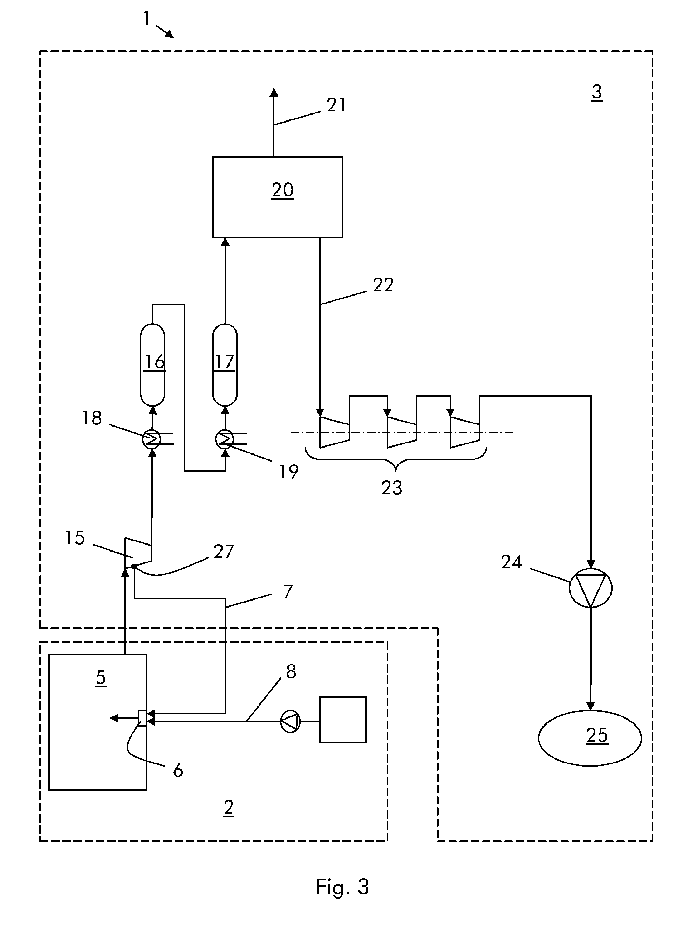

Figure 3 shows an example (preferred example) in which the source of compressed gas containing CO₂ is a connection 27 at an interstage of the multistage flue gas compressor 15.

Also in this example the combustion chamber 5 is preferably an oxy-fuel combustion chamber.

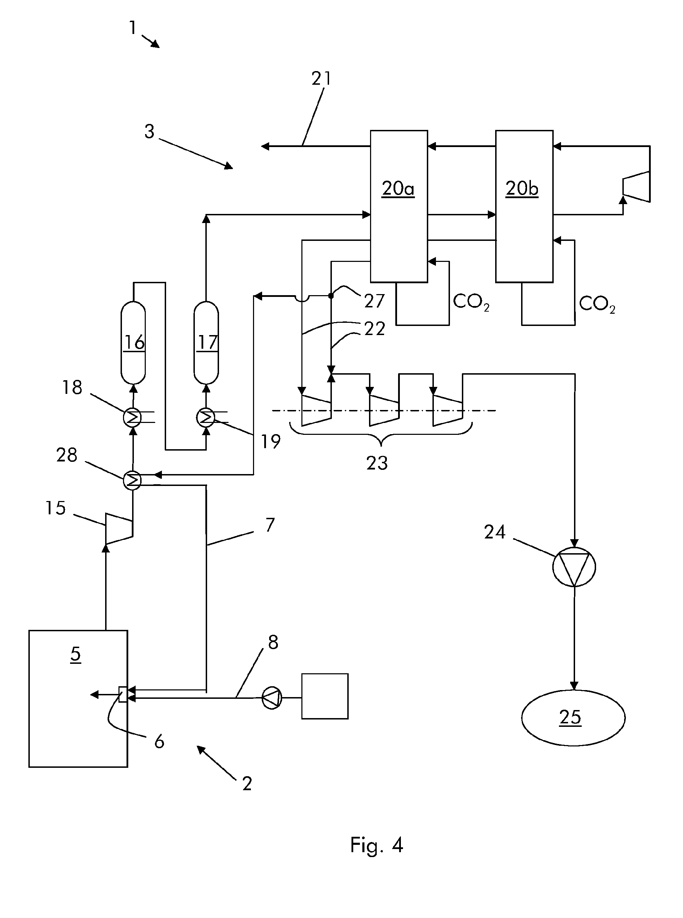

Figure 4 shows an example of an arrangement in which the source of compressed gas containing CO₂ is a connection 27 downstream of the separation stage (for example downstream the separation stage 20a and/or 20b); thus the compressed gas containing CO₂ is substantially pure CO₂ coming from the separation stage.

In this embodiment, a heat exchanger 28 can also be provided; the heat exchanger 28 is used for heating the CO₂ separated at the separation stage 20a by cooling the flue gas passing from the compressor 15 to the mercury removal unit 16. The heat exchanger 28 is connected downstream of the compressor 15 and upstream of the separation stages 20a, 20b.

The separation stages 20a, 20b can be realised in different ways and according to different technologies. For example they can include a plurality of separation stages 20a, 20b (in the examples of the drawings two separation stages); each separation stage can include a condensation step by cooling, in order to separate CO₂ from the other gas of the flue gas.

The operation of the arrangement is apparent from that described and illustrated and is substantially the following (reference to figure 1 is made).

Flue gas produced at the combustion chamber 5 is compressed at the compressor 15 and is then treated at the mercury removal unit 16 and dryer 17 (after cooling in the heat exchangers 18, 19) and is then supplied into the separation stage 20. From the separation stage 20 the CO₂ is discharged and supplied to the compressor 23, the pump 24 and finally the CO₂ is fed into pipeline for use or storage 25. In addition, the gas separated from the CO₂ (such as nitrogen, argon, etc.) is vented via line 21.

At the connection 27 (between the compressor 15 and the separation stage 20) a part of the flue gas (as the compressed gas containing CO₂) at a pressure of about 10-15 bar and at a temperature of about 110°C is diverted through the gas supply line 7 to the injectors 6. At the injectors 6 also fuel such as heavy residue is supplied; flue gas and fuel are thus injected into the combustion chamber 5 where combustion occurs.

The operation of the arrangement of figure 3 is similar to the operation described; in particular at the connection 27 (which is at an interstage of the multistage compressor 15) a part of the flue gas (as the compressed gas containing CO₂) at a pressure of about 10-15 bar is diverted through the gas supply line 7 to the injectors 6. At the injectors 6 also fuel such as heavy residue is supplied; flue gas and fuel are thus injected into the combustion chamber 5 where combustion occurs.

The operation of the arrangement of figure 4 is also similar to the operation described. In particular, at the connection 27 (between the separation stage 20 and the compressor 23) a part of the compressed CO₂ (as the compressed gas containing CO₂) at a pressure of about 10-15 bar is diverted through the gas supply line 7; this compressed CO₂ is heated at the heat exchanger 28 and is then forwarded to the injectors 6. At the injectors 6 also fuel such as heavy residue is supplied; compressed CO₂ and fuel are thus injected into the combustion chamber 5 where combustion occurs.

The present invention also refers to a method for injecting fuel into a combustion chamber.

The method comprises supplying a compressed gas containing CO₂ to injectors 6, supplying a fuel to the injectors 6, injecting the compressed gas containing CO₂ and the fuel into the combustion chamber 5 together.

Injecting comprises injecting the compressed gas containing CO₂ through nozzles 11, and having the fuel drawn from the gas passing through the nozzle 11 and injected from the nozzle 11 together with the compressed gas containing CO₂.

In different examples, supplying the compressed gas containing CO₂ comprises withdrawing at least a part of flue gas at an interstage during multistage compression and/or downstream of compression and/or upstream of the separation, and/or withdrawing at least a part of the separated CO₂. In this last case the separated CO₂ is preferably heated by cooling the flue gas.

Naturally the features described may be independently provided from one another.

In practice the materials used and the dimensions can be chosen at will according to requirements and to the state of the art.

### REFERENCE NUMBERS

- 1: arrangement
- 2: combustion system
- 3: flue gas treatment system
- 5: combustion chamber
- 6: injector
- 7: gas supply line
- 8: fuel supply line
- 11: nozzle
- 12: side passage
- 15: compressor
- 16: mercury removal unit
- 17: dryer
- 18: heat exchanger
- 19: heat exchanger
- 20, 20a, 20b: separation stage
- 21: line
- 22: line
- 23: compressor
- 24: pump
- 25: storage
- 27: connection
- 28: heat exchanger

## Claims

1. An arrangement (1) of a combustion system (2) and a flue gas treatment system (3),
the combustion system (2) comprising
a combustion chamber (5) with at least an injector (6),
a gas supply line (7) connected to the at least an injector (6),
a fuel supply line (8) connected to the at least an injector (6),
**characterised in that**
the gas supply line (7) is connected to a source of compressed gas containing CO₂.

2. The arrangement (1) of claim 1, **characterized in that** the source of compressed gas containing CO₂ is included in the arrangement (1).

3. The arrangement (1) of claim 1, **characterized in that** the flue gas treatment system (3) comprises a multistage compressor (15) for compressing the flue gas discharged from the combustion chamber (5), wherein the source of compressed gas containing CO₂ is a connection (27) at an interstage of the multistage compressor (15).

4. The arrangement (1) of claim 1, **characterized in that** the flue gas treatment system (3) comprises a compressor (15) for compressing the flue gas discharged from the combustion chamber (5),
at least a separation stage (20, 20a, 20b) downstream of the compressor (15), for separating CO₂ from other gas contained in the flue gas,
wherein the source of compressed gas containing CO₂ is a connection (27) downstream of the compressor (15) and upstream of the at least a separation stage (20, 20a, 20b).

5. The arrangement (1) of claim 1 or 3 or 4, **characterized in that** the combustion chamber (5) is an oxy-fuel combustion chamber.

6. The arrangement (1) of claim 1, **characterized in that** the flue gas treatment system (3) comprises at least a separation stage (20, 20a, 20b) for separating CO₂ from other gas contained in the flue gas,
wherein the source of compressed gas containing CO₂ is a connection (27) downstream of at least one of the separation stages (20, 20a, 20b).

7. The arrangement (1) of claim 6, **characterized by** further comprising a heat exchanger (28) for heating the CO₂ separated at the at least one separation stage (20, 20a, 20b) by cooling the flue gas.

8. The arrangement (1) of claim 7, **characterized in that** the flue gas treatment system (3) comprises a compressor (15) for compressing the flue gas discharged from the combustion system, wherein the heat exchanger (28) is connected downstream of the compressor (15) and upstream of the at least one separation stage (20, 20a, 20b).

9. The arrangement (1) of claim 1, **characterized in that** the injector (6) comprises at least a nozzle (11), the at least a nozzle (11) is connected to the gas supply line (7), for injecting the compressed gas containing CO₂,
the at least a nozzle (11) is connected to a side passage (12), which in turn is connected to the fuel supply line (8).

10. A method for injecting fuel into a combustion chamber, **characterised by**
supplying a compressed gas containing CO₂ to at least an injector (6),
supplying a fuel to the at least an injector (6), injecting the compressed gas containing CO₂ and the fuel into the combustion chamber (5) together.

11. The method of claim 10, **characterized in that** flue gas from the combustion chamber (5) is compressed, wherein supplying a compressed gas containing CO₂ comprises withdrawing at least a part of the flue gas at an interstage during multistage compression.

12. The method of claim 10, **characterized in that** flue gas from the combustion chamber (5) is compressed and then CO₂ is separated from other gas contained in the flue gas, wherein supplying a compressed gas containing CO₂ comprises withdrawing at least a part of the flue gas downstream of compression and upstream of the separation.

13. The method of claim 10 or 12, **characterized in that** the flue gas originates from an oxy-fuel combustion process.

14. The method of claim 10, **characterized in that** flue gas from the combustion chamber (5) is compressed and then CO₂ is separated from other gas of the flue gas, wherein supplying the compressed gas containing CO₂ comprises withdrawing at least a part of the separated CO₂.

15. The method of claim 10, **characterized in that** injecting comprises
injecting the compressed gas containing CO₂ through at least a nozzle (11),
having the fuel drawn from the gas passing through the nozzle (11) and injected from the nozzle (11) together with the compressed gas containing CO₂.
